# EUROPEAN PATENT APPLICATION

(11) **EP 2 554 442 A1**
(43) Date of publication of application: **06.02.2013**
(21) Application number: 12178714.7
(22) Date of filing: 31.07.2012
(51) Int. Cl.: B60T 1/10, B60K 6/10, B60R 21/013

(54) **Apparatus for braking flywheel systems and method for dissipating energy stored therein**

(30) Priority: 01.08.2011 US 201161513701 P
(71) Applicant: Spicer Off-Highway Belgium N.V., B-8200 Brugge (BE)
(72) Inventor: Versteyhe, Mark Rj, 8020 Oostkamp (BE); Wesolowski, Steven J, Waterville, OH 43566 (US); Remboski, Donald J, Ann Arbor, MI 48105 (US); Morscheck, Timothy, Portage, MI 49024 (US)
(74) Representative: Pfenning, Meinig & Partner GbR

(57) **Abstract**

A flywheel energy storage assembly and a method for dissipating energy stored in a flywheel assembly is provided. The flywheel energy storage assembly includes a flywheel rotatably disposed in a flywheel housing, a fluid source, a braking actuator in fluid communication with the fluid source and an interior of the flywheel housing, a sensor, and a controller in communication with the sensor and the braking actuator. In response to a stimulus detected by the sensor, the controller directs the braking actuator to facilitate fluid communication between the fluid source and the interior of the flywheel housing to dissipate energy stored in the flywheel energy storage assembly.

## Description

The present invention relates primarily to an apparatus for braking flywheel systems and to a method for dissipating energy stored in flywheel systems.

There is a rising demand to increase fuel economy in a wide range of vehicles, including passenger vehicles, commercial vehicles, such as tractor trailers, and off-highway vehicles, such as mining and construction equipment. One of the ways to increase fuel economy is to reduce the size of the engine for any gasoline powered vehicle. Of course, if the engine size is reduced, available power is also reduced unless a supplemental power source for high or increased power demands can be selectively engaged.

One possible supplemental power source for vehicles may be such as a mechanical flywheel. Flywheel energy storage systems work by accelerating a rotor or disc to very high speeds via an external device, such as an internal combustion engine, electromagnet, or axle. The available rotational energy in the flywheel can be transferred into mechanical energy, thus providing a power source to the driveline. The rotating flywheel can also be used as a power sink during braking by transferring the driveline's kinetic energy into rotational energy. The energy transfers depend on the intended driveline's behavior. When energy is extracted from the flywheel, the rotational speed of the flywheel is reduced as a consequence of the principle of conservation of energy; adding energy to the flywheel correspondingly results in an increase in the speed of the flywheel.

In one example, a flywheel energy storage system can be connected to the front or rear axle of a vehicle. During periods of deceleration, braking energy is used to speed up the flywheel to a high-speed rotational state. The high-speed rotational speed may be about up to 60,000 revolutions per minute. When the vehicle accelerates, the rotational energy from the flywheel is transferred to mechanical energy to the driving wheels of the vehicle via a specially designed device, like a continuously variable transmission, for example.

It can be appreciated from the foregoing that flywheels store a tremendous amount of energy. This energy typically is dissipated in a highly controlled manner at predetermined times. However, there may be certain circumstances when this energy needs to be very quickly dissipated in order to prevent or reduce damage to the flywheel itself or secondary systems. Events such as vehicle crashes are one circumstance where the energy in the flywheel must be dissipated. In any circumstance where the energy in the flywheel must be reduced or brought to zero, it must be done so in a controlled but rapid method so as to avoid an abrupt stop and/or damage to the flywheel or associated parts.

Thus, it is an object of the present invention to develop an apparatus and method for safely dissipating flywheel energy that operates rapidly and in a controlled manner without significantly increasing a cost of a flywheel energy storage system.

This object is solved by a flywheel energy storage assembly and by a method according to the independent claims. Special embodiments are described in the dependent claims.

In one embodiment, the present invention is directed to a flywheel energy storage assembly comprising a flywheel rotatably disposed in a flywheel housing, a fluid source, a braking actuator in fluid communication with the fluid source and an interior of the flywheel housing, a sensor, and a controller in communication with the sensor and the braking actuator. The controller is configured to direct the braking actuator in response to a stimulus detected by the sensor to facilitate fluid communication between the fluid source and the interior of the flywheel housing.

In another embodiment, the present invention is directed to a flywheel energy storage assembly for a vehicle comprising a flywheel rotatably disposed in a flywheel housing, the flywheel forming a portion of a driveline of the vehicle and an interior of the flywheel housing having a vacuum being drawn thereupon, a pressure relief valve disposed in the flywheel housing, a vessel containing a liquid, a valve in fluid communication with the vessel and the interior of the flywheel housing, a pre-crash detection sensor, and a controller in communication with the pre-crash detection sensor and the braking actuator. The controller is configured to direct the braking actuator in response to a stimulus detected by the pre-crash detection sensor to facilitate fluid communication between the vessel and the interior of the flywheel housing.

The present invention also is directed to a method of dissipating energy stored in a flywheel assembly. The method comprises the steps of providing the flywheel assembly including a flywheel rotatably disposed in a flywheel housing, providing a fluid source, providing a braking actuator in fluid communication with the fluid source and an interior of the flywheel housing, providing a sensor, providing a controller in communication with the sensor and the braking actuator, detecting a stimulus using the sensor, communicating a signal to the controller from the sensor in response to the stimulus, opening the braking actuator using the controller in response to the signal, causing the fluid source to be in fluid communication with the interior of the flywheel housing, and dissipating energy stored in the flywheel assembly by delivering a fluid from the fluid source to the interior of the flywheel housing.

Various aspects of this invention will become apparent to those skilled in the art from the following detailed description of the preferred embodiment, when read in light of the accompanying drawings.

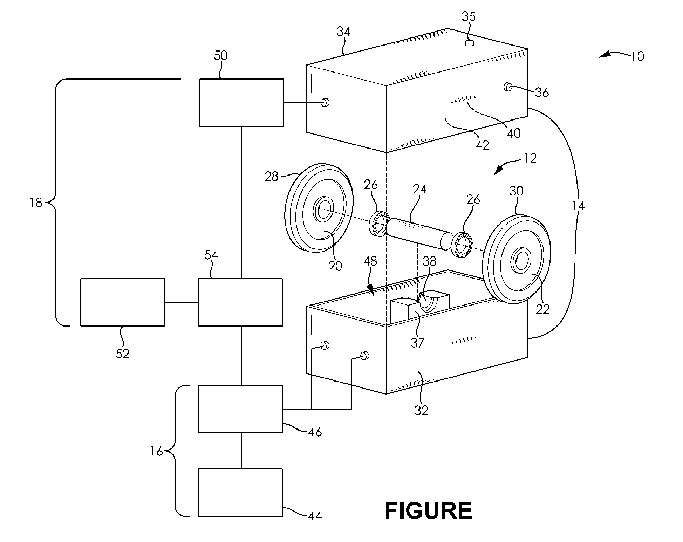

The above, as well as other advantages of the present invention, will become readily apparent to those skilled in the art from the following detailed description when considered in the light of the accompanying drawings in which the FIGURE is a schematic view of a flywheel energy storage system according to an embodiment of the present invention.

It is to be understood that the invention may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions, directions or other physical characteristics relating to the embodiments disclosed are not to be considered as limiting, unless expressly stated otherwise.

The FIGURE illustrates a flywheel energy storage assembly 10 for a vehicle (not shown) according to an embodiment of the invention. The flywheel energy storage assembly 10 includes a flywheel assembly 12, a flywheel housing 14, a flywheel braking assembly 16, and a flywheel controller assembly 18. The flywheel energy storage assembly 10 is configured for use with the vehicle; however, it is understood that the flywheel energy storage assembly 10 may be used in other applications.

The flywheel assembly 12 includes a first flywheel 20, a second flywheel 22, and an axle 24. The flywheel assembly 12 is balanced to permit rotation in a high-speed rotational state. The flywheel assembly 12 is rotatably disposed coupled to the flywheel housing 14 and is supported therein by at least two bearings 26. As shown in the FIGURE, the flywheel assembly 12 includes two flywheels 20, 22; however, it is understood that the flywheel assembly 12 may include any number of flywheels.

The first flywheel 20 is a disc shaped or cylindrical shaped member. The first flywheel 20 is disposed on a first end of the axle 24 and is in driving engagement therewith. A reinforcement band 28 is disposed on an outer edge of the first flywheel 20; however, it is understood that the first flywheel 20 may not include the reinforcement band 28. The first flywheel 20 is formed by casting and machining a metal; however, it is understood that other processes and materials, such as forming the first flywheel 20 from a composite, may be used.

The second flywheel 22 is a disc shaped or cylindrical shaped member. The second flywheel 22 is disposed on a second end of the axle 24 and is in driving engagement therewith. A reinforcement band 30 is disposed on an outer edge of the second flywheel 22; however, it is understood that the second flywheel 22 may not include the reinforcement band 30. The second flywheel 22 is formed by casting and machining a metal; however, it is understood that other processes and materials, such as forming the second flywheel 22 from a composite, may be used.

The axle 24 is a substantially cylindrical member disposed through the flywheels 20, 22 and is drivingly engaged therewith; however, it is understood that the axle 24 may have other shapes and may be integrally formed with the flywheels 20, 22. The axle 24 may be formed from a material dissimilar to a material used to form the flywheels 20, 22. The bearings 26 are disposed on the axle 24 and an inner race of each of the bearings 26 is in driving engagement with the axle 24. The axle 24 is configured to permit a torque to be applied thereto. As non-limiting examples, the axle 24 may be configured to permit the torque to be applied thereto with a gear (not shown) fitted to the axle 24, with an armature (not shown) of an electric motor or generator, a transmission input or a transmission output, or another device.

The reinforcement bands 28, 30 are respectively disposed on the outer edges of the flywheels 20, 22. The reinforcement bands 28, 30 resist forces applied to the flywheels 20, 22 when the flywheels 20, 22 are placed in the high rotational state. The reinforcement bands 28, 30 may be formed from metal having a high tensile strength, a composite material comprising a carbon fiber, or other materials capable of resisting the forces applied to the flywheels 20, 22 when the flywheels 20, 22 are placed in the high rotational state.

The bearings 26 are disposed between the flywheel housing 14 and the axle 20, and rotatably support the flywheels 20, 22 within the flywheel housing 14. An outer race of each of the bearings 26 is rigidly coupled to the flywheel housing 14. The bearings 26 capable of supporting the flywheels 20, 22 in the high-speed rotational state are conventional and well known in the art. As non-limiting examples, the bearings 26 may be non-contact bearings, such as a fluid bearing or a magnetic bearing. However, it is understood that the bearings 26 may also be a contact bearing, such as a ceramic bearing.

The flywheel housing 14 is a hollow body which encloses the flywheel assembly 12. As shown in the FIGURE, the flywheel housing 14 comprises a first portion 32 and a second portion 34; however, it is understood that the flywheel housing 14 may be formed from any number of components. The flywheel housing 14 forms a portion of a vehicle driveline (not shown), and it is understood that the flywheel housing 14 may be coupled to or integrated with a power source (not shown) or a transmission (not shown) of the vehicle. A vacuum is drawn on the flywheel housing 14. The flywheel housing 14 is configured with a vacuum port 35 to facilitate the vacuum being drawn on the flywheel housing 14. The flywheel housing 14 also includes a pressure relief valve 36 disposed therein. The pressure relief valve 36 is conventional and well known in the art. The flywheel braking assembly 16 may be coupled to or is in fluid communication with the flywheel housing 14.

The first portion 32 is a hollow member which partially encloses the flywheel assembly 12 when the flywheel energy storage assembly 10 is in an assembled state. As shown in the FIGURE, the first portion 32 is substantially rectangular in shape; however it is understood that the first portion 32 may be any shape. The first portion 32 is formed by casting and machining a metal. Alternately, the first portion 32 may be formed from other materials, such as a composite, for example, using other processes. Further, the first portion 32 may be formed from a plurality of components coupled together. The first portion 32 include a mounting protuberance 37 extending therefrom having two bearing journals 38 formed therein for supporting the bearings 26. The mounting protuberance 37 is an elongate portion of the first portion 32 extending from an inner surface thereof. Further, it is understood that the bearing journals 38 and the mounting protuberance 37 may support seals or other components.

The second portion 34 is a hollow member which partially encloses the flywheel assembly 12 when the flywheel energy storage assembly 10 is in an assembled state. As shown in the FIGURE, the second portion 34 is substantially rectangular in shape; however it is understood that the second portion 34 may be any shape. The second portion 34 is formed by casting and machining a metal. Alternately, the second portion 34 may be formed from other materials, such as a composite, for example, using other processes. Further, the second portion 34 may be formed from a plurality of components coupled together. The second portion 34 include a mounting protuberance 40 extending therefrom having two bearing journals 42 formed therein for supporting the bearings 26. The mounting protuberance 40 is an elongate portion of the second portion 34 extending from an inner surface thereof. Further, it is understood that the bearing journals 42 and the mounting protuberance 40 may support seals or other components.

The flywheel braking assembly 16 includes a fluid source 44 and a braking actuator 46. The flywheel braking assembly 16 cooperates with the flywheel controller assembly 18 to deliver a fluid to an interior volume 48 of the flywheel housing 14. The flywheel braking assembly 16 may be coupled to the flywheel housing 14. Alternately, the flywheel braking assembly 16 may be in fluid communication with the interior volume 48 and located elsewhere on the vehicle.

The fluid source 44 is in fluid communication with the braking actuator 46. The fluid source 44 supplies a braking fluid to the braking actuator 46. The fluid source 44 may be one of a vessel, a conduit forming a portion of a vehicle fluid system, and an ambient environment the vehicle is disposed in. When the fluid source 44 is the vessel, the fluid source 44 contains a pre-measured volume of the braking fluid. The pre-measured volume of the braking fluid is capable of dissipating an amount of energy stored in the first flywheel 20 and the second flywheel 22. When the fluid source 44 is the conduit forming a portion of the vehicle fluid system, the conduit may form a portion of one of a vehicle coolant system, a vehicle air conditioning system, and a vehicle lubrication system, which contain the braking fluid. As non-limiting examples, the braking fluid may be water, a water based mixture of liquids, a coolant, a refrigerant, a lubricant, or other liquids. When the fluid source 44 is the ambient environment the vehicle is disposed in, the braking fluid is air.

The braking actuator 46 is a pneumatic control valve in fluid communication with the interior volume 48 of the flywheel housing 14 and the fluid source 44. Alternately, the braking actuator 46 may be any other type of valve. The flywheel controller assembly 18 is in communication with the braking actuator 46 and directs the braking actuator 46 to open or close in response to a stimulus. As a non-limiting example, the braking actuator 46 is capable of opening or closing in about 100 milliseconds. When the braking actuator 46 is closed, the interior volume 48 of the flywheel housing 14 is isolated from the fluid source 44. When the braking actuator 46 is open, the interior volume 48 of the flywheel housing 14 is in fluid communication with the fluid source 44. A pressure differential between the fluid source 44 and the interior volume 48 of the flywheel housing 14 facilitates delivery of the braking fluid to the interior volume 48 of the flywheel housing 14.

The flywheel controller assembly 18 includes a flywheel speed sensor 50, an actuation sensor 52, and a controller 54. The flywheel controller assembly 18 forms a portion of a vehicle control system (not shown). The braking actuator 46, the flywheel speed sensor 50, and the actuation sensor 52 are in communication with the controller 54.

The flywheel speed sensor 50 detects a rotational speed of the at least one of the first flywheel 20, the second flywheel 22, the axle 24, or a rotating component in driving engagement with one of the first flywheel 20 and the second flywheel 22. The flywheel speed sensor 50 is a conventional sensor and well known in the art. The flywheel speed sensor 50 generates a speed signal in response to the rotational speed. The speed signal generated by the flywheel speed sensor 50 is received by the controller 50.

The actuation sensor 52 detects the stimulus the vehicle is exposed to. The actuation sensor 52 may be one of a plurality of sensor types that are conventional and well known in the art. The actuation sensor 52 may be one of a lateral acceleration sensor, a longitudinal acceleration sensor, a vehicle roll rate sensor, an airbag deployment detection sensor, a pre-crash detection sensor, and a radar sensor. Typically, the stimulus indicates the vehicle has crashed or a crash is imminent; however, it is understood that the stimulus may indicate other situations in which the amount of energy stored in the first flywheel 20 and the second flywheel 22 must be dissipated. The actuation sensor 52 generates a sensor signal in response to the stimulus. The sensor signal generated by the actuation sensor 52 is received by the controller 50.

The controller 50 receives the speed signal and the sensor signal. The controller 50 is conventional and well known in the art. The controller 50 includes an algorithm or a set of instructions that determine when the braking actuator 46 should be opened in response to at least one of the speed signal and the sensor signal. In response to the speed signal and the sensor signal, the controller 50 may open the braking actuator 46 for a predetermined amount of time, intermittently, or to release a predetermined amount of the braking fluid. The controller 50 may also be directed to open the braking actuator by the vehicle control system.

In use, the flywheel energy storage assembly 10 facilitates safely dissipating energy stored in the flywheels 20, 22 in a rapid and controlled manner without significantly increasing a cost of the flywheel energy storage assembly 10.

A process for dissipating energy stored in the flywheels 20, 22 begins with the actuation sensor 52 detecting the stimulus. In response to the stimulus, the actuation sensor generates the sensor signal, which is communicated to the controller 54. The controller 54 uses the sensor signal to trigger a procedure which dissipates the energy in the flywheels 20, 22. Typically, when the controller 54 triggers the procedure which dissipates the energy in the flywheels 20, 22, the flywheels 20, 22 are in the high-speed rotational state.

The process for dissipating energy stored in the flywheels 20, 22 militates against damage which may be caused to the flywheel energy storage assembly 10 or other portions of a vehicle the flywheel energy storage assembly 10 is incorporated in. Such damage may occur if a portion of the flywheel energy storage assembly 10 becomes deformed as a result of a crash, and such damage can be reduced or eliminated if the flywheels 20, 22 are stopped or significantly slowed from the high speed rotational state.

It can be appreciated that the flywheel energy storage assembly 10 must have a relatively quick reaction and performance time as there is only a short amount of time available between detection of the stimulus and any damage which may be caused to the flywheel energy storage assembly 10. In this short time, the flywheels 20, 22 must be subject to a quick but effective means for dissipating the energy stored in the flywheels 20, 22.

The energy stored in the flywheels 20, 22 may be quickly and effectively dissipated by exposing the flywheels 20, 22 to the braking fluid. As a first non-limiting example, the braking fluid may be air. The interior volume 48 the flywheels 20, 22 are disposed in may have a vacuum drawn upon to limit churning losses by friction between the flywheels 20,22 and surrounding air. When the braking fluid is air, the controller 54 directs the braking actuator 46 to open, which release the vacuum and exposes the flywheels 20, 22 and the interior volume 48 to the ambient air.

Alternately, the braking actuator 46 may be in fluid communication with the fluid source 44 which is the vessel containing pressurized air. When the flywheel energy storage assembly 10 is installed on commercial vehicles, for example, pressurized air is readily available, and the fluid source 44 may be an air reservoir or a conduit containing pressurized air. When the controller 54 directs the braking actuator 46 to open, the pressurized air enters the interior volume 48 and functions to brake the flywheels 20, 22 and remove heat from the flywheels 20, 22 and the interior volume 48. The heat may be generated by braking the flywheels 20, 22. Air in a non-heated state is relatively dense, and effectively acts as a brake to dissipate energy stored in the flywheels 20, 22. Further, air directed into the interior volume 48 may be highly turbulent, which also facilitates in braking the flywheels 20, 22.

Air, however, is not the only fluid that may be used to dissipate energy stored in the flywheels 20, 22. If air is not available, water from a reservoir or an engine cooling system may be injected into the interior volume 48. The water can exert large a braking moment on the flywheels 20, 22. Water injected into the flywheel housing 14 while the flywheels 20, 22 are in the high speed rotational state will result in enough energy dissipation that at least some of the water will be converted to steam. The steam can exit the flywheel housing 14 through the pressure relief valve 36 to relieve pressure that may be generated during braking of the flywheels 20, 22. Since a vaporization heat of water is quite high, only a limited quantity of water is needed to keep the system at relative low temperatures (around 100°C). Further, the fluid source 44 may contain a pre-measured volume of water, the pre-measured volume of water capable of dissipating the amount of energy stored in the flywheels 20, 22

While using air and water as the braking fluid are described separately above, it is possible that air and water may be used in combination, such as in series or in parallel. Further, it is within the scope of the present invention to use other fluids as the braking fluid other than air and water. For example, it may be possible to use a refrigerant, a lubricating fluid (such as an engine lubricant or a transmission lubricant), and a vehicle coolant in place of, or in combination with, the air and water described above.

Additionally or alternatively, the invention may include one or several of the following aspects:
1. A flywheel energy storage assembly for a vehicle, comprising:
   a flywheel rotatably disposed in a flywheel housing, the flywheel forming a portion of a driveline of the vehicle and an interior of the flywheel housing having a vacuum being drawn thereupon;
   a pressure relief valve disposed in the flywheel housing;
   a vessel containing a liquid;
   a valve in fluid communication with the vessel and the interior of the flywheel housing;
   a pre-crash detection sensor; and
   a controller in communication with the pre-crash detection sensor and the braking actuator, wherein the controller is configured to direct the braking actuator in response to a stimulus detected by the pre-crash detection sensor to facilitate fluid communication between the vessel and the interior of the flywheel housing.
2. The flywheel energy storage assembly according to aspect 1, wherein the vessel contains a pressurized liquid.
3. The flywheel energy storage assembly according to aspect 1 or 2, wherein the liquid is one of water, a coolant, a refrigerant, and a lubricant.
4. The flywheel energy storage assembly according to any one of the preceding aspects, wherein vessel contains a pre-measured volume of liquid, the pre-measured volume of liquid capable of dissipating an amount of energy stored in the flywheel.
5. The flywheel energy storage assembly according to any one of the preceding aspects, wherein the sensor is one of a lateral acceleration sensor, a longitudinal acceleration sensor, a vehicle roll rate sensor, an airbag deployment detection sensor, a pre-crash detection sensor, and a radar sensor.
6. The flywheel energy storage assembly according to any one of the preceding aspects, further comprising a flywheel speed sensor in communication with the controller.

The present invention has been described in what is considered to represent its preferred embodiments. However, it should be noted that the invention can be practiced otherwise than as specifically illustrated and described without departing from its spirit or scope.

## Claims

1. A flywheel energy storage assembly, comprising:
a flywheel rotatably disposed in a flywheel housing;
a fluid source;
a braking actuator in fluid communication with the fluid source and an interior of the flywheel housing;
a sensor; and
a controller in communication with the sensor and the braking actuator,
wherein the controller is configured to direct the braking actuator in response to a stimulus detected by the sensor to facilitate fluid communication between the fluid source and the interior of the flywheel housing.

2. The flywheel energy storage assembly according to claim 1, wherein the flywheel forms a portion of a vehicle driveline.

3. The flywheel energy storage assembly according to claim 1 or 2, wherein the fluid source is an ambient environment of the flywheel energy storage assembly.

4. The flywheel energy storage assembly according to claim 1 or 2, wherein the fluid source is one of a conduit and a vessel containing air in a pressurized state.

5. The flywheel energy storage assembly according to claim 1 or 2, wherein the fluid source is one of a conduit and a vessel containing a liquid.

6. The flywheel energy storage assembly according to claim 5, wherein the liquid is one of water, a coolant, a refrigerant, and a lubricant.

7. The flywheel energy storage assembly according to claim 5 or 6, wherein the fluid source contains a pre-measured volume of liquid, the pre-measured volume of liquid capable of dissipating an amount of energy stored in the flywheel.

8. The flywheel energy storage assembly according to any one of the preceding claims, wherein the breaking actuator is a valve capable of one of opening and closing in about 100 milliseconds.

9. The flywheel energy storage assembly according to any one of the preceding claims, wherein the sensor is one of a lateral acceleration sensor, a longitudinal acceleration sensor, a vehicle roll rate sensor, an airbag deployment detection sensor, a pre-crash detection sensor, and a radar sensor.

10. The flywheel energy storage assembly according to any one of the preceding claims, wherein the controller forms a portion of a vehicle control system.

11. The flywheel energy storage assembly according to any one of the preceding claims, further comprising a flywheel speed sensor in communication with the controller.

12. The flywheel energy storage assembly according to any one of the preceding claims, further comprising a pressure relief valve disposed in the flywheel housing.

13. The flywheel energy storage assembly according to any one of the preceding claims, wherein a vacuum is drawn on the interior of the flywheel housing.

14. A method of dissipating energy stored in a flywheel assembly, comprising the steps of:
providing the flywheel assembly including a flywheel rotatably disposed in a flywheel housing;
providing a fluid source;
providing a braking actuator in fluid communication with the fluid source and an interior of the flywheel housing;
providing a sensor;
providing a controller in communication with the sensor and the braking actuator;
detecting a stimulus using the sensor;
communicating a signal to the controller from the sensor in response to the stimulus;
opening the braking actuator using the controller in response to the signal, causing the fluid source to be in fluid communication with the interior of the flywheel housing; and
dissipating energy stored in the flywheel assembly by delivering a fluid from the fluid source to the interior of the flywheel housing.
